# EUROPEAN PATENT SPECIFICATION

(11) **EP 0 588 176 B1**
(45) Date of publication and mention of the grant of the patent: **02.12.1998**
(21) Application number: 93114079.2
(22) Date of filing: 02.09.1993
(51) Int. Cl.: B60R 21/20

(54) **A pad for use in an air bag device**
Abdeckung für einen Airbag
Couvercle pour un airbag

(30) Priority: 16.09.1992 JP 246803/92; 16.09.1992 JP 246805/92; 18.09.1992 JP 250052/92
(43) Date of publication of application: 23.03.1994
(73) Proprietor: TOYODA GOSEI CO., LTD., Nishikasugai-gun Aichi-ken (JP)
(72) Inventor: Hongo, Suzuaki, c/o Toyoda Gosei Tech. Center, Inazawa-shi, Aichi (JP); Shiraki, Kouji, c/o Toyoda Gosei Tech. Center, Inazawa-shi, Aichi (JP); Yamamoto, Tadashi, c/o Toyoda Gosei Tech. Center, Inazawa-shi, Aichi (JP); Ogawa, Hiroshi, c/o Toyoda Gosei Tech. Center, Inazawa-shi, Aichi (JP); Ikeda, Takanobu, c/o Toyoda Gosei Tech. Center, Inazawa-shi, Aichi (JP)
(74) Representative: Blumbach, Kramer & Partner GbR

(56) References cited:
- EP-A- 0 357 356
- EP-A- 0 367 319
- EP-A- 0 367 415
- EP-A- 0 428 935
- EP-A- 0 487 753
- EP-A- 0 564 974
- DE-U- 8 915 085
- GB-A- 2 250 295
- US-A- 4 148 503
- PATENT ABSTRACTS OF JAPAN vol. 17 no. 430 (M-1460) ,10 August 1993 & JP-A-05 092745 (NIPPON PLAST) 16 April 1993,

## Description

The present invention relates to a pad for covering an outer, or upper, surface of an air bag device which is installed for example, to a steering wheel of a car or to an instrument panel. Particularly the present invention relates to a pad for use in an air bag device which is formed in a single layer of a thermoplastic elastomer (TPE) that can be manufactured with high productivity.

Conventionally, a pad for use in an air bag device is manufactured from polyurethane material foamed by reaction injection forming (RIM) wherein a net insert is embedded in the polyurethane material. The net insert is embedded to reinforce the outer wall portion of the pad when the air bag is inflated. The conventional manufacturing method, however requires of a large number of man-hours for production of an air pad due, in part, to separate operation required to set the net insert; and further, the thermosetting polyurethane material used is not recyclable, to name but two.

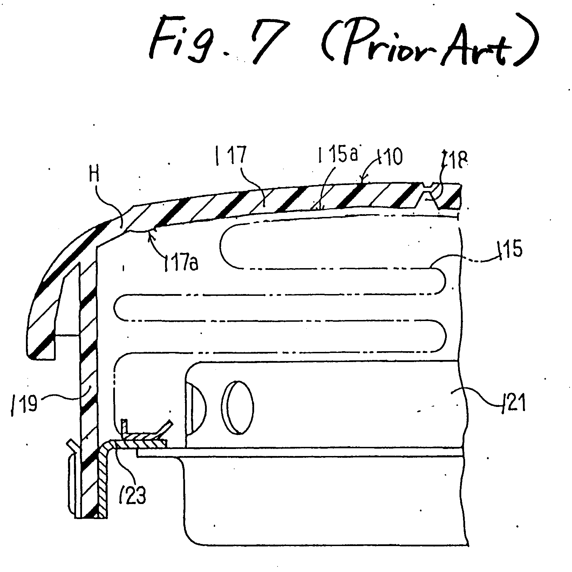

Several pads have been proposed to overcome these, and similar problems. For example, Japanese Patent Publication No. Hei. 3-189252, discloses a pad consisting of a combination of integrally formed and core layers; the top layer being formed of a first soft resin material (a styrene-system TPE) and the core layer formed of a second resin material (an olefin-system resin) which is harder than the first resin material. This combination pad, however, requires the prior formation of the core layer in a separate procedure with the top layer being later formed around the core, using the core layer as an insert. This separate step increases the number of man-hours for production. Further, the insert forming complicates the structure and design of the mold. Figure 7 is an illustration of a pad composed of a core layer (a hard resin layer) 111 and a top layer (a soft resin layer) 113.

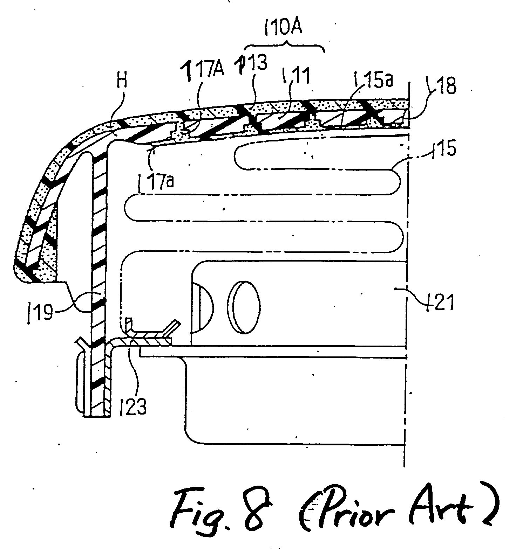

Another conventional air bag device proposes injection molding TPE in a single layer, as shown in Fig. 8. When such an air bag is expanded (inflated), however, such an air bag cover is unacceptable, principally, for the following reasons, which are explained with reference to Fig. 7.

An air bag 115, while it is folded, is disposed adjacent to the back surface of a pad develop portion, or, that portion of the pad which splits when the bag is inflated, 117. When the air bag 115 is inflated, a great frictional resistance is produced between the inner surface of the pad develop portion 117 and the air bag 115. As a result, the pad develop portion 117 is pulled instantly with a great force by the air bag 115 and thus a great stress is given to the hinge portion "H" of the pad develop portion 117 and to a pad side wall portion 119, which continuously adjoins the hinge portion H. Accordingly, the pad must be designed in such a manner that it can withstand such stress. Such design limitations reduce the number of useful materials as well the ultimate shape of the pad. Such limitations are even more extreme when the pad 110 is formed of a TPE single-layer product substantially excluding an insert, because there must be used a soft material which has a good cold resistance (i.e., one which has a low brittle temperature).

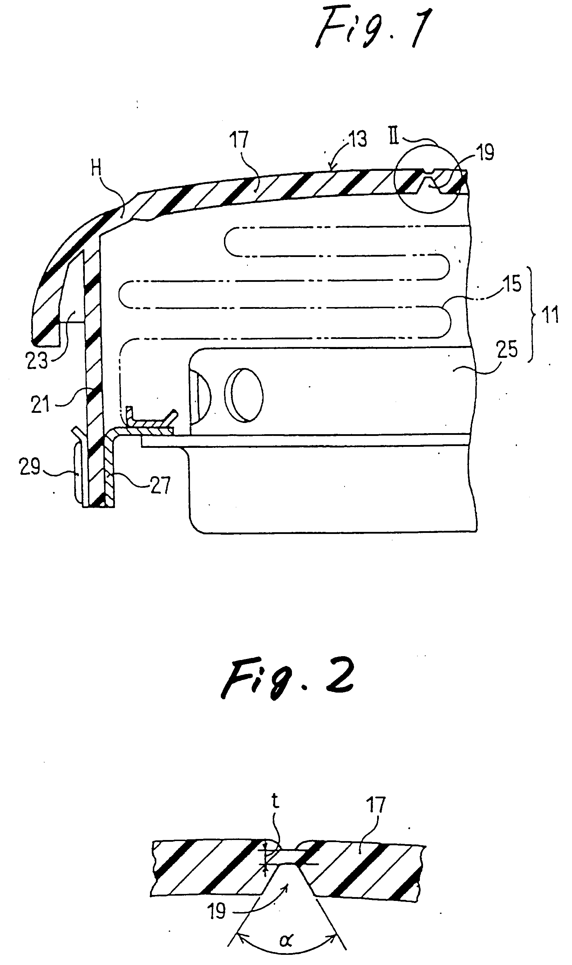

EP-A-0 367 319 discloses a pad for an airbag device which pad consists of an integral injection molded body being formed of thermoplastic elastomer. As best seen in Fig. 2, the known pad does not provide a specific groove portion. Instead thereof, the thickness of the cover is gradually and continuously decreasing from the lateral portions to the central portion so that the thickness within this central portion is smaller than same at the lateral outer portions.

DE-U-89 15 085 discloses a pad for an airbag device pad which consists of an double layer structure. The pad comprises small grooves or slits 1C as shown in Fig. 2. The outer layer may consist of a thermoplastic elastomer of a styrene system or polyester-system.

EP-A-0 357 356 discloses a rupturable cover for an airbag compartment, the cover comprising cover sections being hinged to the compartment and being connected, in the center part of the cover, by a rupturable membrane. In the region of the membrane, a groove is formed.

The present invention provides a pad for use in an air bag device which eliminates the need to separately form a core layer to be used in subsequent insert forming of a top layer, thus reducing the number of required man-hours and simplifying the structure and design of the injection mold.

A pad according to the present invention is further described, in various embodiments, by means of the following structure.

According to one embodiment of the present invention, there is provided a pad to cover an outer portion of an air bag device. The present pad includes a pad main body having a continuous groove portion which, when the air bag is inflated, will be broken to allow the outer wall portion of the pad main body to separate.

According to one aspect of the invention, the pad main body is formed in a single layer of a styrene-system TPE or a polyester-system TPE having a low temperature tensile strength T_{B} (-35°C); 200 - 500 kgf/cm² (19.6 - 49 MPa) and an outer wall portion average thickness of 2.5 - 6 mm, where the developing groove portion has a remaining or narrowed thickness of 0.3 - 1.5 mm. Further, the inner side included angle of the developing groove portion is set in a range of 30 - 90°.

In a further embodiment the present invention, provides a pad for use in an air bag device to cover an, outer surface of the air bag device, composed of a pad main body including a continuous developing groove portion which, when the air bag is inflated, will be broken to allow an outer wall portion of the pad main body to develop, in which the pad main body is formed in a single layer of a thermoplastic elastomer (TPE) having a low temperature tensile strength T_{B} (-35°C); 200 - 500 kgf/cm² (19.6 - 49 MPa) where the outer wall portion of the pad main body has an average thickness of 2.5 - 6 mm. The developing groove portion, preferably, has a remaining or narrowed thickness of 0.3 - 1.5 mm and the inner side included angle of the developing groove portion is set in a range of 30 - 90°.

One skilled in the art will appreciate that the present invention eliminates many of the limitations of conventional air bag pad devices. Accordingly, it is an object of the present invention to provide a pad for an air bag device which prevents production of a great tension force in a pad develop portion when an air bag is inflated.

The pad may be provided for an air bag service in which an air bag while folded is included adjacent to the inner surface of a pad develop portion and at least the pad develop portion inner surface is formed of a thermoplastic elastomer layer, such that at least one of the inner surface of the pad develop portion or the outer surface of the air bag facing the inner surface of the develop portion include a layer provided to reduce friction.

One skilled in the art will appreciate that although the present invention is described in further detail as a steering wheel air bag cover formed of a single-layer injection molding of TPE, the invention is not limited to the one embodiment, but it may comprise an air bag device of a type, for example, for use in a steering wheel or a passenger's seat.
Fig. 1 is a longitudinal section view of a half section of an air bag device, showing a pad according to the invention mounted to the air bag device;
Fig. 2 is an enlarged section view of a portion designated by II in Fig. 1; and
Fig. 3 is a plan view of the pad shown in Fig. 1.
Fig. 4 a longitudinal section view of another embodiment of a pad according to the invention, showing how to mount the pad into an air bag device;
Fig. 5 is a plan view of the pad shown in Fig. 4;
Fig. 6 is a longitudinal section view of another embodiment of a pad according to the invention, showing how to mount the pad into an air bag device.
Fig. 7 is a longitudinal section view of a conventional pad composed of a single layer; and
Fig. 8 is a longitudinal section view of a conventional pad composed of a core layer and top layer.

The instant invention will be described, in one embodiment, with reference to Figure 1.

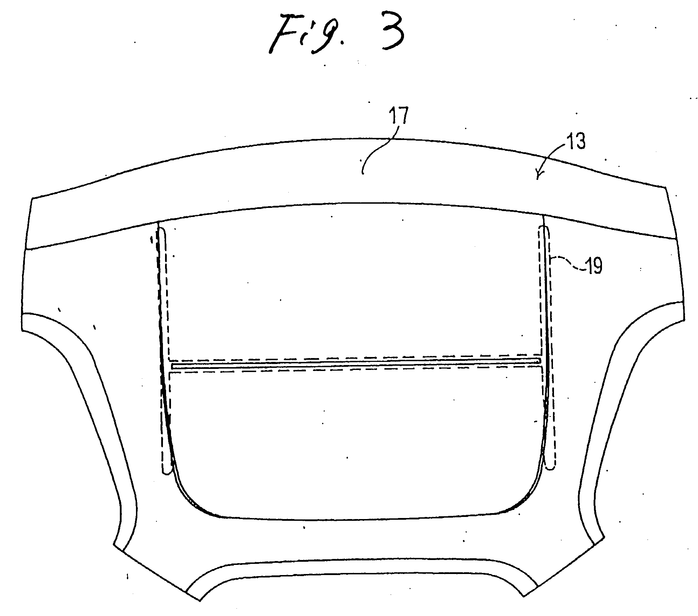

The invention provides a pad to cover an outer surface of an air bag device 11 and includes a pad main body 13. The pad main body 13 in turn includes a continuous developing groove portion 19 which, when the air bag is inflated, will be broken to allow an outer portion 17 to develop. In this structure, although the shape of the developing groove portion 19 is not limited to a specific shape, normally, it may be constructed in an H-like shape as shown in Fig. 3.

According to this embodiment, the pad main body is formed in a single layer of a thermoplastic elastomer (TPE) having a low temperature tensile strength T_{B} (-35°C): 200 - 500 kgf/cm² (19.6 - 49 MPa) within an average thickness of the outer wall portion of the pad main body being, preferably, 2.5 - 6 mm. However, the low temperature tensile strength T_{B} (-35°C) is preferrably 300 - 400 kgf/cm².

If the low temperature tensile strength of the thermoplastic elastomer used is less than the above preferred range, the developing groove portion 19 may be prematurely broken by an external force other than the preferred bag inflation. Further, if the low temperature tensile strength exceeds the above range, the developing groove portion may not be broken smoothly when the air bag is inflated.

If the average thickness of the outer wall portion is less than the preferred thickness, i.e., less than 2.5 mm, then the shape of the pad main body cannot be sufficiently retained. If the outer wall portion average thickness is larger than 6 mm, the weight of the pad main body is undesirably increased. Further, preferably, the average thickness of a peripheral wall portion 21 may be set in a range of 2.5 - 6 mm depending, for example, on considerations of shape retention. Often, as partially shown in Fig. 1, a plurality of reinforcing ribs 23 may be properly interposed between the outer peripheral portion inner surface of the outer wall portion 17 and the outer periphery of the peripheral portion 21.

One skilled in the art will appreciate that the TPE of the present invention may be any available such that the material satisfies the properties described above. Applicable TPE's may be, for example, a styrene-system TPE, a polyester-system TPE and the like. However, a styrene-system TPE which is subjected to a polymer blend with a olefin-system resin (PP, PE) may be used.

Examples of styrene-system TPE include any one of an SBS(polystyrene-polybutadiene-polystyrene block copolymer)-system TPE including polybutadiene as its soft segment , an SIS(polystyrene-polyisoprene-polystyrene block copolymer)-system TPE including polyprene as its soft segment, an SEBS(polystyrene-polyethylene/polybutylene-polystyrene block copolymer)-system TPE including polyolefin as its soft segment, and the like. In these TPEs, the SEBS TPE is desirable because it does not include a double bond between molecules and is excellent in weatherability, wear resistance, thermal resistance and the like. A Tuftec (manufactured by Asahi Chemical Industry Co.) of the SEBS-system TPE, and the like can be used.

Examples of polyester-system TPE, include both a polyester/polyether type TPE and a polyester/polyester type TPE. Polyester/polyether type TPE includes polyester such as polybutylene phthalate or the like as a hard segment, and polyether such as polytetramethylene glycol ether (PTMG), PTMEGT (a condensation product of PTMG and terephthalic acid), as a soft segment. Polyester/polyester type TPE includes polybutylene phthalate or the like as a hard segment, and aliphatic polyester such as polycaprolactone or the like as a soft segment. Preferably, a Romod (manufactured by General Electric Co.) and a Hytrel (manufactured by Du Pont Co.) of a polyester/polyether type TPE are used.

According to another embodiment of the present invention, the remaining thickness t of the developing groove portion 19 is set in a range of 0.3 - 1.5 mm (preferably, 0.5 - 1 mm) and the inner side included angle of the developing groove portion 19 is set in a range of 30 - 90° (preferably, 50 - 70°). If the remaining thickness of the developing groove portion 19 is less than 0.3 mm, the developing groove portion 19 may be prematurely broken by an external force other than bag inflation. When the remaining thickness exceeds 1.5 mm, in this embodiment, there is a possibility that the developing groove portion 19 may not be broken when the air bag is inflated. Further, when the inner side included angle is less than 30°, then the surface of the pad can be easily torn whereas, if the angle exceeds 90°, the developing groove portion may not be broken smoothly. Because the outer side included angle of the developing groove portion 19 has little influence on the developing action of the outer wall portion 17, the groove shape and included angle may be selected with greater freedom.

An area which provides a hinge portion H shape when the outer wall portion is developed, or split, is adapted to have a thickness smaller than the average thickness of the outer wall portion 17, normally, a thickness of 2 - 4 mm, so that the develop portion can be easily developed.

A method of manufacturing the pad of the present invention is described, in one embodiment, below, as a representative example.

A compound of the above described polystyrene-system TPE or polyester-system TPE is injected into a forming mold as a forming material. The material is formed to produce a pad. In this production, according to demand, the surface of the molded or produced pad may be coated with a weatherable paint to finish the pad. Such a pad 13 is then assembled to an inflator 25, to which an air bag 15, disposed above a boss (not shown) of a steering wheel, is assembled, by a rivet 29 or the like through a retainer 27.

By setting the low temperature tensile strength of a TPE material in a given range and also specifying the remaining thickness and lower side tapered shape of the developing groove portion, even when the pad is formed of the TPE material in a single layer, as will be shown in test examples to follow, the present invention provides a pad wherein the developing ability of the pad will not be impaired when the pad is inflated. Therefore, there is eliminated the need to form a core layer separately, followed by insert forming a top layer using the core layer as an insert, which has been required in the conventional pad. Thus, the present invention greatly reduces the number of man-hours for production and further simplifies the structure of a forming mold used when the pad is formed.

Japanese Patent Publication No. Hei. 2-171364, discloses a technical concept including a pad for use in an air bag device which is formed of a TPE in a single layer. This reference, however does not disclose nor suggested the concept of the present invention which includes a specific material property (low temperature tensile strength) of a TPE to a given range in combination with a structure and thickness for the inner side included angle and developing groove portion such that the developing ability of the develop portion is improved when the pad is inflated.

The following comparative data illustrates the superior properties according to the present invention.

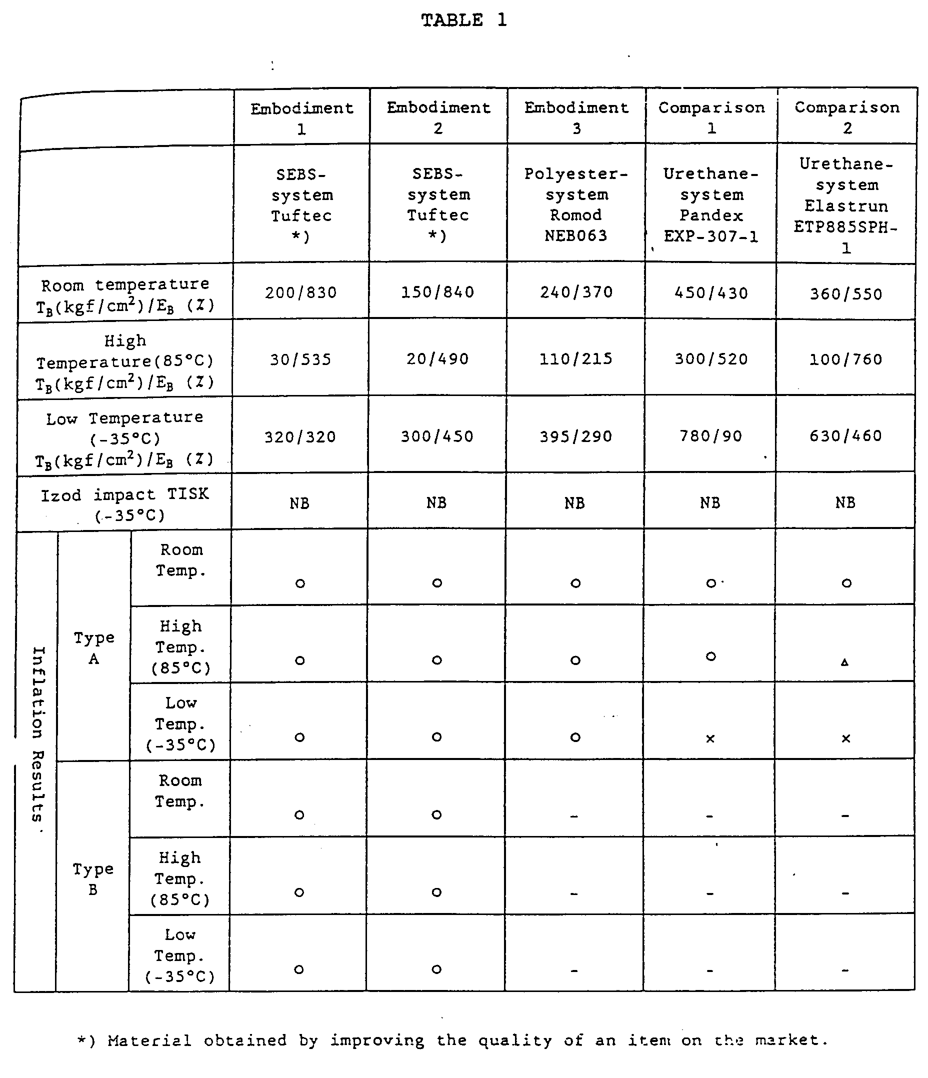

By use of materials shown in Table 1, pads were formed according to the respective embodiments of the invention and comparisons. Urethane-system TPEs were used for comparison purposes. Comparison 1, a TPE material manufactured by Dainippon Ink and Chemicals, Inc. was used. In comparison 2, a TPE material manufactured by Nippon Elastrun Co. was used.

The specifications of the pads were as follows:
Type A - Outer wall portion area: 300 cm², Outer wall portion average thickness: 5 mm, Developing groove portion remaining thickness: 1.0 mm, Developing groove portion back side included angle: 60°,
Type B - Outer wall portion area: 270 cm², Outer wall portion average thickness: 4.5 mm, Developing groove portion remaining thickness: 0.5 mm, Developing groove portion back side included angle: 50°.

The pads were respectively assembled to an air bag device similar to one to be installed to an actual car and then inflation tests were conducted at temperatures shown in Table 1. The pads were visually observed and reported in Table 1 wherein, O indicates proper development; △ indicates that the pad was torn in part; and x indicates that the pad was scattered or unacceptably torn. It can be understood from Table 1 that the respective embodiments of the invention provide a superior product while the comparisons provide unacceptable products, especially at lower temperatures.

Table 1, also includes data of the physical properties of the materials used. Physical property data was obtained by preparing and measuring test pieces.

Tests of the (1) tensile strength (T_{B}): ASTM D638, (2) tensile extension (E_{B}): ASTM D638, and (3) Izod impact strength: ASTM D256 were conducted and the results are reproduced in Table 1.

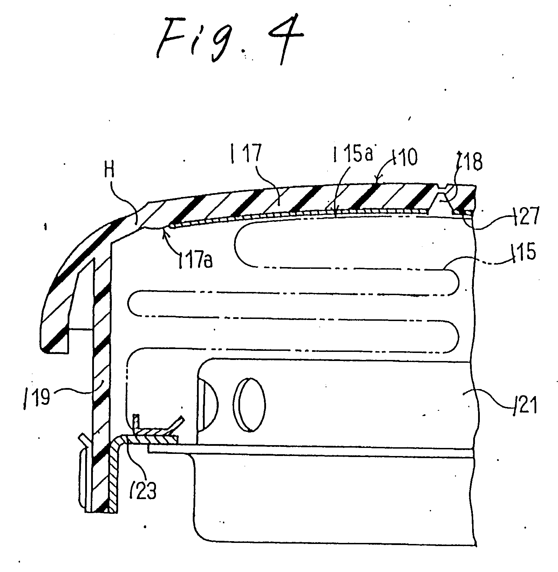

In another embodiment the air bag device of the present invention will be described with reference to Fig. 4, which includes an inflator 121, an air bag 115 and a pad 110, respectively mounted through a retainer 123 to the inflator 121.

In the illustrated air bag device, the air bag 115 while folded is contained adjacent to the inner, or back, surface of a pad develop portion 117. As shown in Fig. 4, the pad 110 is formed in a single layer of a TPE.

Further, the pad 110 includes a developing groove portion 118 which adjoins continuously the inner, or back, surface of the pad and also which, when the air bag is inflated, will be broken to allow the develop portion 117 to develop. The entire shape of the developing groove portion 118 is not limited to a specific shape but, normally, may be formed in an H-like shape.

While the TPE is not limited to a specific thermoplastic elastomer (TPE), a styrene-system TPE, a polyester-system TPE, an olefin-system TPE, thermoplastic rubber (TPR) and the like way be conveniently used for this purpose. In the styrene-system TPEs, a SEBS-system TPE is preferable which essentially does not include a double bond in its principal chain but is excellent in weatherability, heat resistance, low temperature shock resistance and the like.

In this embodiment, the present invention includes a slidability, or, stress-reducing processed layer 127 which is formed in at least one of the inner, or, back, surface 117a of the pad develop portion 117 and the air bag surface 115a facing the back surface 117a. The slidability processed layer 127 may be formed in either of the pad develop portion back surface 117a or air bag surface 115a. Coating and performance considerations however, often make it more operationally advantageous for the stress-reducing layer to be formed only on the pad develop portion inner surface 117a.

When the slidability processed, or, stress-reducing layer 127 is formed only on the air bag surface 115a, not only may the operability be suboptimal, but also, subsequent to the air bag inflation, there is a possibility that the pad develop portion inner surface 117a may come into contact with the air bag surface 115 in which the slidability processed layer 127 is not formed. In such a case, there is a concern that the performance of the present invention may be suboptimal. To eliminate such a concern, it is necessary to form the slidability layer substantially on the whole surface of the air bag 115 in an effort to assure proper contact and increased slidability.

The slidability processed layer 127 is not limited to a specific embodiment but may be included in any embodiment of the present invention, provided that, even if it is exposed to a high heat and vibratory conditions, it will not slip off from a surface to be processed and a friction coefficient reducing operation thereof will not decrease greatly. However, the following embodiments are preferable. In the following representative description, the coating can be made by various means depending, in part, on the coating materials employed; that is, the coating may be applied by brushing, spraying, or dipping the coating material, or rubbing with a solid member made of a bar-shaped sliding material.

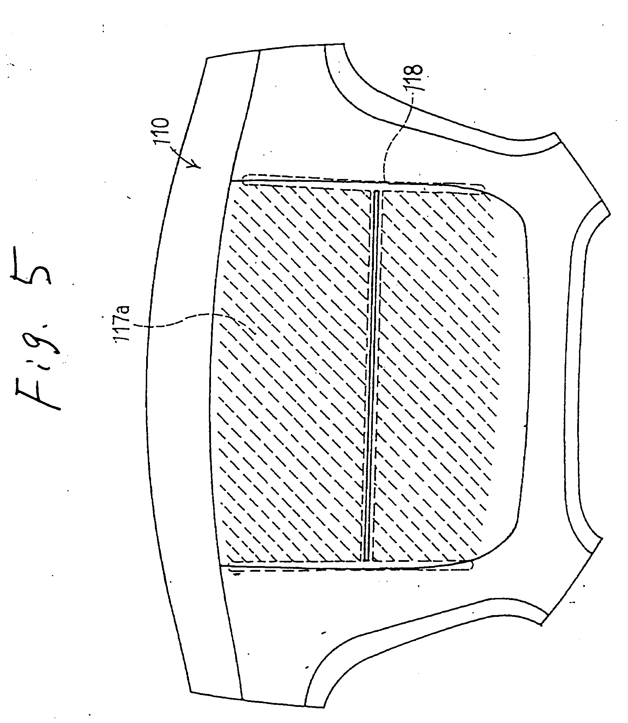

By way of example of the slidability processed layer 127, a sliding coated film is formed on the inner surface (a hatch portion shown by a dotted line in Fig. 5) 117a of the pad develop portion 117. As a single coating material, there are available a urethane-system coating material, a fluorine-system coating material, a silicone-system coating material and similar coating materials.

As occasion demands, a surface to be treated is previously treated with a primer as will be determined by one skilled in the art. In these coating materials, the urethane-system coating material or film is preferable from the point of view of the film contactability and the like. As a composite coating material, there can be used a mixture of a co-cement, which is produced by diluting the same or similar material of the pad main body with a solvent, with a solid lubricant powder. In this case, as the solid lubricant, there can be used graphite, molybdenum disulfide, boron nitride, graphite fluoride, tungsten disulfide, Teflon, and the like. As occasion demands, such solid lubricant powder can be added to the above-mentioned single-system coating material. To form the lubricant processed layer, talc, a solid surface active agent, wax, paraffin, polyamide, or the like may be coated onto the pad develop portion inner surface 117a or air bag surface 115a.

The present invention including such a stress-reducing layer may be further described by the following performance characteristics. When the air bag is expanded (the air bag is inflated), and the pad is developed, the air bag 115 is inflated while it is rubbing against the pad develop portion inner surface 117a. According to the present invention, because at least one of the pad develop portion back surface 117a and the air bag surface 115a includes the slidability processed layer 127, there is less friction resistance between the two surfaces. This eliminates the possibility that the pad develop portion 117 will be pulled instantly with a great force by the air bag 115, with the result that the hinge portion H and the pad side wall portion 119, continuously adjoining the hinge portion H, are free from great stress.

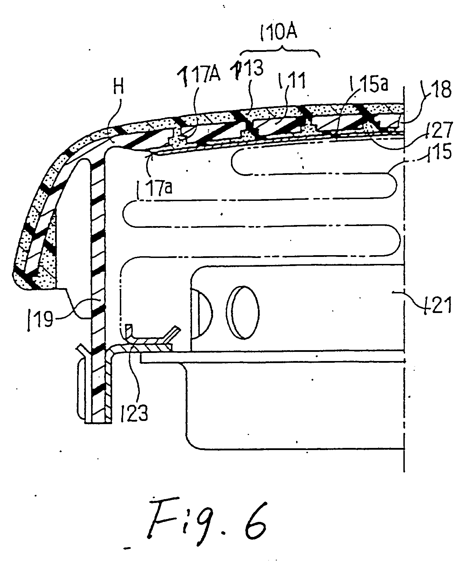

The invention has been described above by way of a single layer pad. However, the invention is not limited to this but, alternatively, the present invention can also apply to other types of pads such as a pad 110A which is shown in Fig. 6. In this pad 110A, a core layer 111 is inserted, a top layer 113 is produced by injection forming a TPE material, and the TPE material is disposed behind the pad develop portion 117A.

Due to the inclusion of the slidability, or stress-reducing layer, formed on at least one of the develop portion inner surface and the air bag surface facing to the develop portion inner surface, the air bag device according to the invention provides the following operational effects.

Upon inflation, the air bag rubs against the pad develop portion inner surface. The slidability processed layer is formed, however, on at least one of the pad develop portion inner surface and air bag surface, resulting in a decrease in frictional resistance is produced between the two surfaces. This eliminates, or greatly reduces, the possibility that the pad develop portion will be pulled instantly with a great force by the air bag. As a result, stress applied to the hinge portion of the pad develop portion and a pad side wall portion will be reduced, allowing greater freedom of design and material.

Description is given below of tests conducted to confirm the outstanding results provided by the present invention.

Each of the TPE materials shown in Table 2 is injection formed into a single layer pad 110 having a shape shown in Figs. 4 and 5. With respect to the pads 110 respectively formed in this manner and having the following specifications, the slidability processed layer 127 is formed in the develop portion back, or, inner surface 117a according to the following methods.

The respective pads 110 were mounted to an air bag device similar to one to be installed in an actual car and, for each of the pads 110, an inflation test was conducted at an atmospheric temperature of 85°C. One skilled in the art will appreciate that a high atmospheric temperature such as 85°C will provide conditions where the friction coefficient of the TPE material is expected to be grater than at lower temperatures.

The development of the test pads were visually observed and the results are reported in Table 2 as follows. The acceptable developed state was marked with O; when a crack occurred in a part of the pad, △ was used; and when the pad was scattered, x was used. As can be understood from Table 2, in both comparison examples in which no slidability processed layer was formed, abnormal and unacceptable results occurred on the pad surface, while no abnormal phenomenon and acceptable results were achieved in both embodiments according to the present invention.

In Table 2, the physical properties of the respective materials used are stated for reference. The physical properties data at room temperatures are taken from the physical properties data published by the respective manufacturers. The respective physical properties data are tested with respect to (1) the tensile strength (T_{B}): ASTM D638, (2) the tensile extension (E_{B}) ASTM D638, (3) the tear strength (T_{R}): JIS K6301, and (4) the hardness: JIS K6301 or ASTM D2240.

Pads of the following dimensions were used; area of the upper, or, outer, wall portion: 300 cm²; average thickness of the outer wall portion: 5 mm; remaining thickness of the developing groove portion: 1.0 mm.

The slidability processed layer VP921 (manufactured by Nagashima Tokushu Toryo Co.), which is a urethane type primer, was coated by spraying and was dried by wind with subsequent application of Sun Coat Grace (of a double liquid system; manufactured by Nagashima Tokushu Toryo Co.) spray coating which was hardened under conditions of 80°C x 30 min.

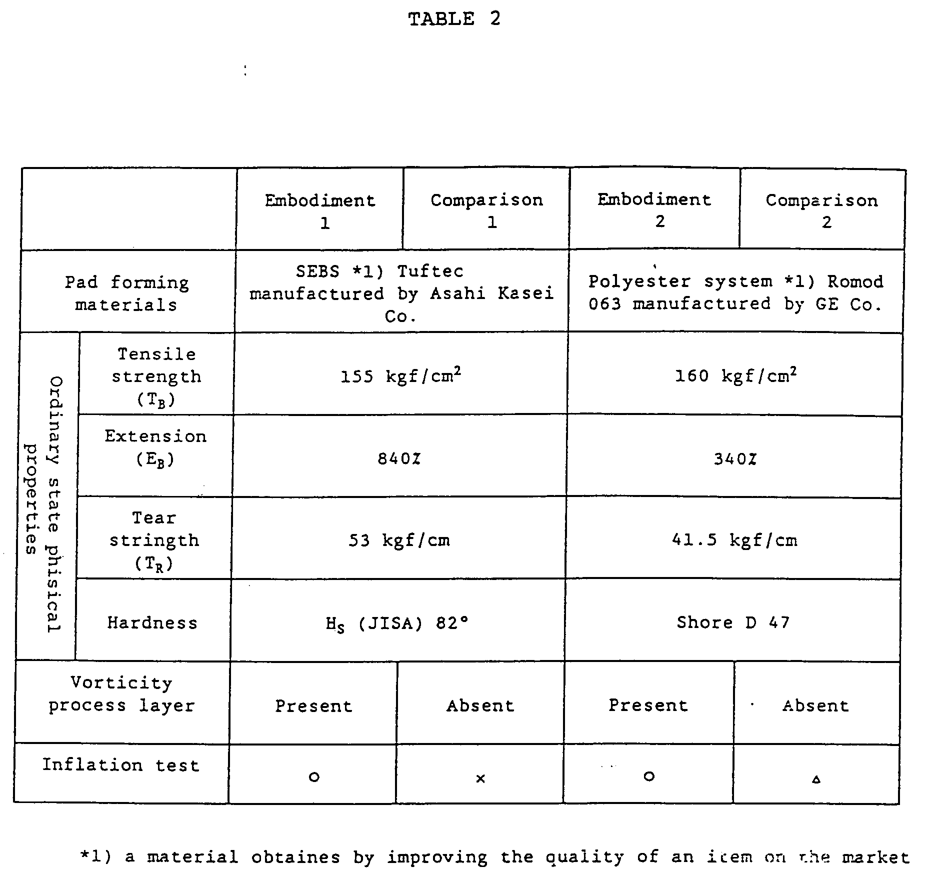

## Claims

1. A pad for use in an air bag device, comprising a pad main body (13) including a continuous developing groove portion (19) which, when an air bag (15) is inflated, will be broken to allow an outer wall portion (17) of the pad main body to develop, wherein
said pad main body (13) is formed by a single layer of a thermoplastic elastomer having a low temperature tensile strength T_{B} (-35°C): 200 - 500 kgf/cm² (19,6 - 49 MPa), said outer wall portion having an average thickness of 2,5 - 6 mm; and
said developing groove portion (19) having a thickness of 0,3 - 1,5 mm at the narrowest point, and the back side included angle of the developing groove portion is in the range of 30° - 90°.

2. The pad according to claim 1, in which said thermoplastic elastomer is one of a styrene-system thermoplastic elastomer and a polyester-system thermoplastic elastomer.

3. The pad according to claim 1 or 2, further comprising:
a slidability processed layer (127) formed on at least one of the inner surface of the develop portion of the pad main body and the surface of said air bag facing to the develop portion inner surface when the air bag device is assembled.

4. The pad according to claim 3, wherein said slidability processed layer (127) is made of one of a urethane-system coating material, a fluorine-system coating material, and a silicone-system coating material.

5. The pad according to claim 3, wherein said slidability processed layer is made of a mixture of a co-cement, which is produced by diluting the same or similar material of the pad main body with a solvent, further comprising a solid lubricant powder.

6. The pad according to claim 5, in which said solid lubricant powder is selected from the group consisting of graphite, molybdenum disulfide, boron nitride, graphite fluoride, tungsten disulfide and Teflon.

## Patentansprüche

1. Abdeckung für den Einsatz in einer Airbageinrichtung, mit einem Abdeckungshauptkörper (13), der einen kontinuierlichen Entfaltungsrillenabschnitt (19) enthält, der bei dem Aufblasen eines Airbags (15) zerbrochen wird und eine Entfaltung eines Außenwandabschnitts (17) des Abdeckungshauptkörpers ermöglicht, wobei
der Abdeckungshauptkörper (13) aus einer einzigen Lage eines thermoplastischen Elastomers gebildet ist, das eine Niedertemperatur-Zugfestigkeit T_{B} (-35°C) von 200 - 500 kgf/cm² (19,6 - 49 MPa) aufweist, wobei der Außenwandabschnitt eine durchschnittliche Dicke von 2,5 - 6 mm besitzt; und
wobei der Entfaltungsrillenabschnitt (19) eine Dicke von 0,3 - 1,5 mm an dem schmalsten Punkt aufweist und der rückseitige eingeschlossene Winkel des Entfaltungsrillenabschnitts im Bereich von 30° - 90° liegt.

2. Abdeckung nach Anspruch 1, bei der das thermoplastische Elastomer ein thermoplastisches Elastomer des Styrolsystems oder ein thermoplastisches Elastomer des Polyestersystems ist.

3. Abdeckung nach Anspruch 1 oder 2, die weiterhin aufweist:
eine hinsichtlich Gleitfähigkeitseigenschaften bearbeitete Schicht (127), die mindestens an der inneren Oberfläche des Entfaltungsabschnitts des Abdeckungshauptkörpers und/oder an derjenigen Oberfläche des Airbags ausgebildet ist, die der inneren Oberfläche des Entfaltungsabschnitts zugewandt ist, wenn die Airbageinrichtung zusammengebaut wird.

4. Abdeckung nach Anspruch 3, dadurch gekennzeichnet, daß die hinsichtlich Gleitfähigkeitseigenschaften bearbeitete Schicht (127) aus einem Beschichtungsmaterial des Uretansystems, einem Beschichtungsmaterial des Fluoursystems oder einem Beschichtungsmaterial des Silikon-Systems hergestellt ist.

5. Abdeckung nach Anspruch 3, bei der die hinsichtlich Gleitfähigkeitseigenschaften bearbeitete Schicht (127) aus einer Mischung eines Ko-Zements hergestellt hergestellt ist, das durch Auflösen des gleichen oder eines ähnlichen Materials wie der Abdeckungshauptkörper mittels eines Lösungsmittels hergestellt ist, das weiterhin ein festes Schmiermittelpulver enthält.

6. Abdeckung nach Anspruch 5, bei der das feste Schmiermittelpulver aus der Gruppe ausgewählt ist, die aus Graphit, Molybdändisulfid, Bornitrid, Graphitfluorid, Wolframdisulfid und Teflon besteht.

## Revendications

1. Panneau à utiliser dans un dispositif à airbag, comprenant un corps principal de panneau (13) comportant une partie formant gorge de développement continue (19) qui, lorsqu'un airbag (15) est gonflé, se brisera de façon à permettre le développement d'une partie de paroi extérieure (17) du corps principal de panneau, dans lequel :
ledit corps principal de panneau (13) est formé par une seule couche d'un élastomère thermoplastique ayant une résistance à la traction à basse température T_{B} (- 35 °C) : 200 à 500 kgf/cm² (19,6 à 49 MPa) , ladite partie de paroi extérieure ayant une épaisseur moyenne entre 2,5 et 6 mm ; et
ladite partie formant gorge de développement (19) ayant une épaisseur entre 0,3 et 1,5 mm au niveau du point le plus étroit, et l'angle inclus du côté arrière de la partie formant gorge de développement est dans la plage entre 30° et 90°.

2. Panneau selon la revendication 1, dans lequel ledit élastomère thermoplastique est un élastomère thermoplastique à système styrène ou un élastomère thermoplastique à système polyester.

3. Panneau selon la revendication 1 ou 2, comprenant en outre :
une couche traitée d'amélioration de la capacité à glisser (127) formée sur au moins une de la surface intérieure de la partie de développement du corps principal de panneau et de la surface dudit airbag qui fait face à la surface intérieure de la partie de développement lorsque le dispositif à airbag est assemblé.

4. Panneau selon la revendication 3, dans lequel ladite couche traitée d'amélioration de la capacité à glisser (127) est réalisée à partir d'un matériau de revêtement à système uréthane, d'un matériau de revêtement à système à base de fluor, ou d'un matériau de revêtement à système silicone.

5. Panneau selon la revendication 3, dans lequel ladite couche traitée d'amélioration de la capacité à glisser est réalisée à partir d'un mélange de cociment, qui est produit en diluant le même matériau ou un matériau similaire du corps principal de panneau avec un solvant, comprenant en outre une poudre lubrifiante solide.

6. Panneau selon la revendication 5, dans lequel ladite poudre lubrifiante solide est sélectionnée à partir du groupe constitué du graphite, du bisulfure de molybdène, du nitrure de bore, du fluorure de graphite, du bisulfure de tungstène et du Téflon.
